Europäisches Patentamt

European Patent Office

Office européen des brevets

(19)

(11) Publication number: **0 098 648**
**B1**

# (12) EUROPEAN PATENT SPECIFICATION

(45) Date of publication of patent specification: **23.04.86**

(51) Int. Cl.⁴: **C 03 C 13/04, G 02 B 6/16**

(21) Application number: **83200958.3**

(22) Date of filing: **28.06.83**

(54) **Optical fibres having a large numerical aperture.**

(30) Priority: **01.07.82 NL 8202648**

(43) Date of publication of application:
**18.01.84 Bulletin 84/03**

(45) Publication of the grant of the patent:
**23.04.86 Bulletin 86/17**

(84) Designated Contracting States:
**DE FR GB NL**

(56) References cited:
**FR-A-2 223 317**

**CHEMICAL ABSTRACTS, vol. 94, no. 26, 29th
June 1981, page 281, no. 213074e, Columbus,
Ohio, USA**

**CHEMICAL ABSTRACTS, vol. 94, no. 10, 9th
March 1981, page 294, no. 70266f, Columbus,
Ohio, USA**

**CHEMICAL ABSTRACTS, vol. 92, no. 18, 5th
May 1980, no. 151909d, Columbus, Ohio, USA**

(73) Proprietor: **N.V. Philips' Gloeilampenfabrieken
Groenewoudseweg 1
NL-5621 BA Eindhoven (NL)**

(72) Inventor: **Joormann, Hendrik
c/o INT. OCTROOIBUREAU B.V. Prof. Holstlaan 6
NL-5656 AA Eindhoven (NL)**
Inventor: **Spierings, Gijsbertus A. C. M.
c/o INT. OCTROOIBUREAU B.V. Prof. Holstlaan 6
NL-5656 AA Eindhoven (NL)**

(74) Representative: **Auwerda, Cornelis Petrus et al
INTERNATIONAAL OCTROOIBUREAU B.V. Prof.
Holstlaan 6
NL-5656 AA Eindhoven (NL)**

Courier Press, Leamington Spa, England.

**Description**

The invention relates to optical fibres having a large numerical aperture and consisting of multicomponent glasses. The optical fibres may be of the so-called multimode stepped index type or of the graded index type. Optical fibres having a large numerical aperture, i.e. approximately 0.30 or larger, usually comprise at least in the core glass germanium dioxide which is a comparatively expensive component, and in addition such a fibre is sensitive to energy-rich radiation due to the comparatively high germanium content. This result in an increase of the attenuation of the transported light, which increases only partly disappears after termination of the irradiation.

It is an object of the invention to provide optical fibres of large numerical aperture from multicomponent glasses which do not comprise germanium dioxide and in which cladding and core glass comprise no boron oxide. This requires a good adaptation of melting temperature and viscosity at the processing temperature of the multi-component glasses used. In addition it is necessary for the glasses used to have a small tendency to crystallization or phase separation. Another object of the invention is to provide glass compositions which satisfy said requirements.

According to the invention, these objects can be achieved by means of optical fibres the core glass of which has the molecular composition:

57.5—65% $SiO_2$, 0—5% $(ZrO_2+\frac{1}{2}Y_2O_3)$, 10—25% $(Li_2O+Na_2O+K_2O)$,
12.5—27.5% $(MgO+CaO+ZnO+SrO+BaO)$

on the understanding that MgO: 0—5%, CaO: 0—10%, SrO: 0—7.5%, BaO: 0—15%, ZnO: 0—20%, in which, if no BaO is present, the ZnO content is 12.5—20% and, if no ZnO is present, the BaO content is 5—15% and the cladding glass has the molecular composition $SiO_2$: 60—67.5%; (ZnO+CaO+MgO): 10—25% on the understanding that ZnO: 0—10%, CaO: 0—5% and MgO: 0—10% and $(Li_2O+Na_2O+K_2O)$: 10—25% and has a refractive index which is at least 2% lower than the refractive index of the core glass and a viscosity at the processing temperature which is 0.5 to 2 times the viscosity of the core glass expressed in Pa.s.

It has been found that in the case in which the cladding glass satisfies the imposed requirements, stepped index fibres and graded index fibres having a numerical aperture exceeding 0.30 can be obtained by means of, for example, the known double crucible method. In the range of compositions indicated for the core glass, the glasses have a melting temperature between 1250 and 1400°C, a refractive index between 1.550 and 1.595, and a viscosity of 1100°C between 30 and 100 Pa.s.

Within the cladding glass composition range:

$SiO_2$: 60—67.5%
(ZnO+CaO+MgO): 10—25% in which CaO: 0—5%, MgO: 0—10% and ZnO: 0—10%
$(Li_2O+Na_2O+K_2O)$: 10—25%

glasses have a melting temperature between 1300 and 1400°C a refractive index between 1.535 and 1.540 and a viscosity at 1100°C between 70 and 200 Pa.s.

Preferably, if $K_2O$ is present, the content thereof is less than half of the total alkali metal oxide content of the core glass. The tendency to possible crystallization or phase separation upon slow cooling of the core glass is suppressed by said measure. The same applies to the cladding glass.

An optical fibre with a core having a composition within the range as indicated and a cladding consisting of a borosilicate glass is known from CA Vol. 94, No. 26, 29th June 1981, No. 213074e (JP—A—80 154 342). The same applies to CA Vol. 92, No. 18, 5th May 1980, No. 15909d (JP—A—79 148 812). However in both cases the composition of the cladding glass differs from the cladding glasses according to the invention. With the compositions according to the invention it is possible to avoid both the use of $Al_2O_3$ and $B_2O_3$ which may be useful for certain applications.

The following may be noted with respect to the multicomponent glasses which may be used according to the invention in multimode stepped index and graded index fibres of large numerical aperture.

With $SiO_2$ contents less than 57.5 mol.% for the core glass, less than 60 mol.% for the cladding glass, the tendency of crystallization and phase separation, which cause the Rayleigh scattering to increase, of these glasses rapidly increases. With $SiO_2$ contents more than 65 mol.% for the core glass and more than 67.5 mol.% for the cladding glass, the melting temperature becomes higher than 1400°C so that the processibility of the glasses decreases.

In the glass compositions which are used according to the invention in optical fibres, ZnO and MgO improve in particular the corrosion resistance. MgO has a small effect on the refractive index as compared with CaO, ZnO, SrO and BaO, while it causes the light scattering to increase, and this is why it is preferably used in the core glass only in a quantity up to at most 5 mol.%. With quantities exceeding 10 mol.% in the cladding glass, the melting temperature becomes too high for use in optical fibres, while the light scattering also increases. CaO, ZnO, SrO and BaO have a refractive index increasing effect. ZnO is particularly suitable because it causes the Rayleigh scattering to increase only slightly or not to increase at all with increases in concentration. With concentrations larger than those indicated above, however, the

2

tendency to crystallization of glasses rapidly increases. The alkali metal oxides reduce the melting temperature and therewith improve the meltability of the glasses but reduce the corrosion resistance with increasing content for which reason at most 25 mol.% is added. The total alkali metal oxide contents in mol.% of the core glass and of the cladding glass are preferably mutually equal. In these circumstances galvanic cells which might give rise to bubble formation in the double crucible cannot be formed in a platinum crucible when the glasses contact each other. Exchange of alkali metal ions between core glass and cladding glass during the manufacture of optical fibres according to the invention can be prevented by choosing the concentrations of each of the alkali metal oxides present in the core glass and in the cladding glass to be equal. In a preferred embodiment of the invention the overall concentration is 15 mol.%, of which $Li_2O$: 3 mol.% $Na_2O$: 6 mol.% and $K_2O$: 6 mol.%, with this composition the glass has a minimum melting temperature with a maximum corrosion resistance.

Exchange of alkaline earth metal ions will occur with an optically noticeable effect only if the contact time between the core glass and the cladding glass at the processing temperature is sufficiently long.

The quantity of $(ZrO_2 + \frac{1}{2}Y_2O_3)$ is preferably 0—3 mol.%. In the indication of the concentration $\frac{1}{2}Y_2O_3$ is used because $\frac{1}{2}$ gram mol. $Y_2O_3$ is comparable with 1 gram mol. $ZrO_2$ as regards the number of gram atoms of yttrium and zirconium. $ZrO_2$ and/or $Y_2O_3$ is or are used in the core glass if a large numerical aperture is desired and the permissible quantity of BaO, CaO, SrO and/or ZnO is not sufficient to reach the desired refractive index. In particular when $ZrO_2$ is used together with the alkaline earth metal oxides CaO and SrO or together with ZnO, a synergistic effect appears to occur which is expressed in an extra increase of the refractive index above the increase which can be expected from the concentration $ZrO_2$ as appears from the following table.

TABLE

| Quantities in mol.% | | | | | | | |
|---|---|---|---|---|---|---|---|
| $SiO_2$ | $ZrO_2$ | CaO | SrO | ZnO | BaO | Alkali metal ox.5 $Li_2O$, 10 $Na_2O$ 10 $K_2O$ | n |
| 75 | | | | | | 25 | 1.5029 |
| 70 | 5 | | | | | 25 | 1.5337 |
| 62.5 | | 12.5 | | | | 25 | 1.5348 |
| 62.5 | | | 12.5 | | | 25 | 1.5349 |
| 62.5 | | | | 12.5 | | 25 | 1.5332 |
| 62.5 | | | | | 12.5 | 25 | 1.5552 |
| 57.5 | 5 | 12.5 | | | | 25 | 1.5688 |
| 57.5 | 5 | | 12.5 | | | 25 | 1.5723 |
| 57.5 | 5 | | | 12.5 | | 25 | 1.5710 |
| 57.5 | 5 | | | | 12.5 | 25 | 1.5860 |

As appears from the table replacement of 5 mol.% $SiO_2$ by 5 mol.% $ZrO_2$ causes the refractive index in an alkali metal silicate glass to increase by 0.0308. In an alkali metal silicate glass which also comprises CaO, SrO or ZnO, the increase when replacing 5 mol. $SiO_2$ by 5 mol.% $ZrO_2$, however, is 0.0340, 0.0374 and 0.0378, respectively.

For comparison, compositions with BaO are also recorded in which the increase proves to be the expected 0.0308.

Similar effects occur when $Y_2O_3$ is used; this latter oxide also improves the corrosion resistance of the core glass, while the crystallization tendency remains low.

During the preparation of the glasses the usual refining agents may be used, for example, $As_2O_3$ and $Sb_3O_3$. Quantities up to 1 mol.% of $As_2O_3$ and/or $Sb_2O_3$ are preferably added to the above-mentioned compositions. It has been found that in practice this also leads to a lower attenuation in particular at 850 nm.

The glasses can be prepared, for example, as follows. Starting materials are alkali metal carbonates and/or nitrates the other metals (Mg, Ca, Sr, Ba and Zn) may be used in the form of their oxides, carbonates or nitrates, $SiO_2$, $ZrO_2$ (and/or $ZrSiO_4$), $Y_2O_3$ and $Al_2O_3$. Materials of the best possible purity are always used.

This means that the level of those impurities which absorb in the interesting wavelength ranges if possible is smaller than 0.01 ppm. The glass melts are kept at a temperature above the melting point for some time (for example, 1 to 10 hours). Dry gases for example oxygen, carbon monoxide or carbon dioxide, saturated or not saturated with $D_2O$ can be blown through the melt for some time. Rods are drawn from the melts. Said Rods serve as a starting material for the manufacture of optical fibres.

The optical fibres can be manufactured in the manner known for the application of multicomponents glasses, for example, by means of a double crucible method. If desired, a second cladding of a corrosion resistant glass may be provided *via* said method while using an extra crucible.

Dependent on the distance between the outflow apertures of the two crucibles in a double crucible, exchange of alkaline earth metal ions will occur between the core and the cladding glass and a graded index fibre can be obtained. Exchange may occur, for example, between the ions of one or more of the alkaline earth metals Ba, Sr and Ca and Zn (core glass) and the magnesium ion (cladding glass). At processing temperatures between 1000 and 1200°C, the distance must be larger than 500 nm. In the case of smaller distances, the contact time for an optically noticeable ion exchange is too small.

The invention will now be described in greater detail with reference to the following specific example.

An optical fibre was manufactured by means of a double crucible method from glasses of the following molecular composition:

| Core glass: | | Cladding glass: | |
|---|---|---|---|
| 60% | $SiO_2$ | 62.5% | $SiO_2$ |
| 2.5% | $(\frac{1}{2}Y_2O_3)$ | 10% | ZnO |
| 5% | ZnO | 2.5% | CaO |
| 5% | CaO | 10% | MgO |
| 12.5% | BaO | 3% | $Li_2O$ |
| 3% | $Li_2O$ | 6% | $Na_2O$ |
| 6% | $Na_2O$ | 6% | $K_2O$ |
| 6% | $K_2O$ | | |
| Melting temperature | | 1350°C | 1400° |
| Refractive index | | 1.582 | 1.5366 |
| Viscosity (1100°C) | | 40 Pa.s. | (1100°C) 80 Pa.s. |

the glasses were heated in a double crucible up to a temperature of 1100°C after which an optical fibre having the following properties was drawn:

diameter core: 200 μm
diameter fibre: 250 μm
numerical aperture was 0.37
Rayleigh scattering at 850 nm was 2.8 $dB.km^{-1}$
Attenuation at 850 nm was 11 dB/km

**Claims**

1. An optical fibre of germanium-free multicomponent glasses, characterized in that the core glass has the molecular composition:

$SiO_2$: 57.5—65%; $(ZrO_2+\frac{1}{2}Y_2O_3)$ 0—5%; $(Li_2O+Na_2O+K_2O)$: 10—25%; $(MgO+CaO+SrO+BaO+ZnO)$: 12.5—27.5%

on the understanding that MgO: 0—5%; CaO: 0—10%; SrO: 0—7.5%, BaO: 0—15%; ZnO: 0—20% in which, if no BaO is present the ZnO content is 12.5—20% and, if no ZnO is present, the BaO content is 5—15% and the cladding glass has the molecular composition: $SiO_2$: 60—67.5%; $(ZnO+CaO+MgO)$: 10—25% on the understanding that ZnO: 0—10%, CaO: 0—5% and MgO: 0—10% and $(Li_2O+Na_2O+K_2O)$: 10—25% and has a refractive index which is at least 2% lower than the refractive index of the core glass,

4

and a viscosity at the processing temperature which is 0.5 to 2 times the viscosity of the core glass expressed in Pa.s.

2. An optical fibre as claimed in Claim 1, characterized in that when $K_2O$ is present in the core glass, the $K_2O$ content is less than half of the total alkali metal oxide content.

3. An optical fibre as claimed in Claim 1 and 2, characterized in that the alkali metal oxide content of both core glass and cladding glass is 15%.

## Patentansprüche

1. Optische Faser aus germaniumfreien Mehrkomponentengläsern dadurch gekennzeichnet, dass das Kernglas folgende Molekularzusammensetzung besitzt:

$SiO_2$ 57,5—65%; $(ZrO_2+\frac{1}{2}Y_2O_3)$: 0—5%; $(Li_2O+Na_2O+K_2O)$: 10—25%;
$(MgO+CaO+SrO+BaO+ZnO)$: 12,5—27,5%

in dem Sinne, das MgO: 0—5%, CaO: 0—10%; SrO: 0—7,5%; BaO: 0—15%; ZnO: 0—20%; in denen bei Abwesenheit von BaO der ZnO-Gehalt 12,5—20% und bei Abwesenheit von ZnO der BaO-Gehalt 5—15% beträgt, und das Umhüllungsglas folgende Molekularzusammensetzung besitzt: SiO: 60—67,5%; $(ZnO+CaO+MgO)$: 10—25% in dem Sinne, dass ZnO: 2—10%; CaO: 0—5% und MgO: 0—10% und $(Li_2O+Na_2O+K_2O)$: 10—25% beträgt und einen Brechungsindex hat, der zumindest 2% niedriger als der Brechungsindex des Kernglases ist, und bei der Verarbeitungstemperatur eine Viskosität besitzt, die das 0—5-fache bis 2-fache der Viskosität des Kernglases, ausgedrückt in Pa.s. besitzt.

2. Optische Faser nach Anspruch 1, dadurch gekennzeichnet, dass bei Vorhandensein von $K_2O$ im Kernglas der $K_2O$-Gehalt geringer als die Hälfte des gesamten Alkalimetalloxidgehalts ist.

3. Optische Faser nach Anspruch 1 und 2, dadurch gekennzeichnet, dass der Alkalimetalloxidgehalt sowohl des Kernglases als auch des Umhüllungsglases 15% beträgt.

## Revendications

1. Fibre optique en verre à plusieurs composants exempts der germanium, caractérisée en ce que le verre de noyau présente la composition moléculaire:

57,5—65% de $SiO_2$, 0—5% de $(ZrO_2+1/2Y_2O_3)$, 10—25% de
$(Li_2O+Na_2O+K_2O)$, 12,5—27,5% de $(MgO+CaO+SrO+BaO+ZnO)$

avec le réserve que MgO: 0—5%, CaO: 0—10%, SrO: 0—7,5%, BaO: 0—15%, ZnO: 0—20%, dans laquelle, en l'absence de BaO, la teneur en ZnO est de 12,5 à 20% et, en l'absence de ZnO, la teneur en BaO est de 5 à 15% et le verre de la gaine présente la composition moléculaire de $SiO_2$: 60—67,5%; $(ZnO+CaO+MgO)$: 10—25% avec la réserve que ZnO: 0—10%, CaO: 0—5% et MgO: 0—10% et $(Li_2O+Na_2O+K_2O)$: 10—25% et présente une indice de réfraction, qui est inférieur d'au moins 2% à l'indice de réfraction du verre de noyau et présente une viscosité, à la température de traitement, égale à 0,5 à 2 fois la viscosité du verre de noyau exprimée en Pa.s.

2. Fibre optique selon la revendication 1, caractérisée en ce qu'en présence de $K_2O$ dans le verre de noyau, la teneur en $K_2O$ est inférieure à la moitié de la teneur totale en oxyde métal alcalin.

3. Fibre optique selon la revendication 1 ou 2, caractérisée en ce que la teneur en oxyde métal alcalin du verre de noyau, ainsi que du verre de gaine, est inférieure à 15%.